(19) **Europäisches Patentamt / European Patent Office / Office européen des brevets**

(11) **EP 3 168 977 A1**

(12) # EUROPEAN PATENT APPLICATION

(43) Date of publication:
**17.05.2017 Bulletin 2017/20**

(21) Application number: **16167930.3**

(22) Date of filing: **02.05.2016**

(51) Int Cl.:
**H02P 6/16** (2016.01)    **H02P 25/089** (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.11.2015 JP 2015220720**

(71) Applicant: **Sinfonia Technology Co., Ltd.**
**Minato-ku,**
**Tokyo 105-8564 (JP)**

(72) Inventors:
• **KANAZAWA, Kazunari**
  **Minato-ku, Tokyo 105-8564 (JP)**
• **IKEDA, Hiroshi**
  **Minato-ku, Tokyo 105-8564 (JP)**
• **ITO, Yuki**
  **Minato-ku, Tokyo 105-8564 (JP)**
• **TOMIZAKI, Takeshi**
  **Minato-ku, Tokyo 105-8564 (JP)**

(74) Representative: **TBK**
**Bavariaring 4-6**
**80336 München (DE)**

(54) **ROTOR POSITION DETECTION APPARATUS AND MOTOR CONTROL APPARATUS**

(57)  A rotor position detection apparatus (Y) is applied to a SR motor (10) including a stator (12) having salient poles (11a-11c) corresponding to a plurality of phases, each salient pole (11a-11c) having excitation windings (15a-15c), and a rotor (14) disposed in the stator (12) and provided with a plurality of salient poles (13). A magnetic flux detection means (X) is provided with a detection part in a position where a magnetic flux generated by a phase current in the stator (12) is detected. The apparatus (Y) includes a threshold value holding unit (21) holding the magnetic flux detected by the detection part as a threshold value, when the rotor (14) is located at a predetermined detection position; and a comparison unit (25) comparing a threshold value with the magnetic flux, wherein the apparatus (Y) detects that the rotor (14) has reached a predetermined position, based on the comparison result of the unit (25).

**Fig. 7**

**Description**

**TECHNICAL FIELD OF THE INVENTION**

The present invention relates to a rotor position detection apparatus and a motor control apparatus, which are applied to a motor having a salient pole rotor and a stator with windings for switching an excitation phase while detecting a position of the rotor.

**BACKGROUND ART**

There is a switched reluctance motor (hereinafter referred to as an "SR motor") as one of motors having a stator with a salient pole rotor and an excitation winding. An SR motor has a simple structure and requires no permanent magnets, thus suitable for operation at high speeds and high temperatures. A rotation principle of an SR motor is as follows. When the stator salient pole and a rotor salient pole are aligned (salient pole aligned state), a magnetic impedance is reduced and a winding inductance becomes maximum. Thus, when an exciting current flows through a winding of a salient pole in a salient pole non-aligned state that a magnetic flux is difficult to flow, a rotor is rotated to a salient pole aligned state that a magnetic flux flow most easily. Therefore, by switching a phase for supplying an exciting current based on rotor position information, it is possible to rotate a rotor by generating a continuous magnetic attractive force.

As a means for obtaining rotor position information, a position detection sensor has conventionally been used. However, such a sensor is not suitable for use under severe conditions of high-speed and high-temperature operations described above.

Therefore, in recent years, a method for sensorless detection of a rotational position of a rotor without using a position detection sensor has been proposed (Non-Patent Literature 1, Patent Literature 2).

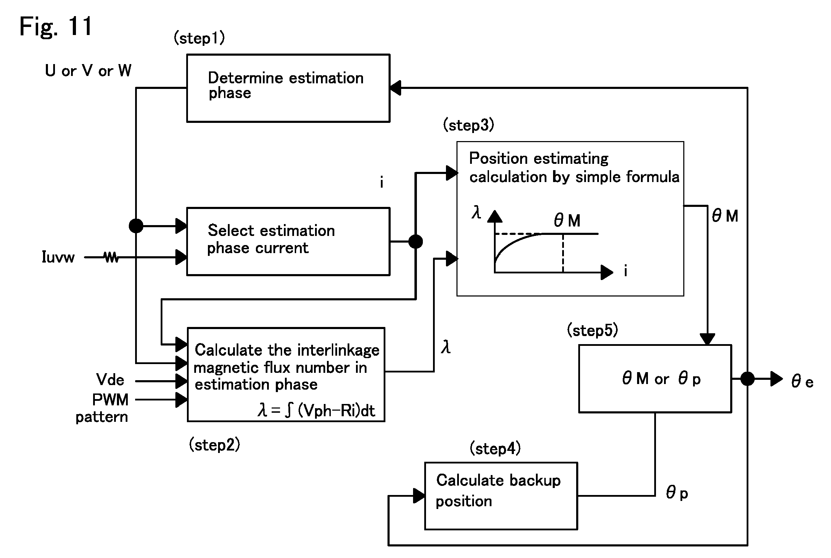

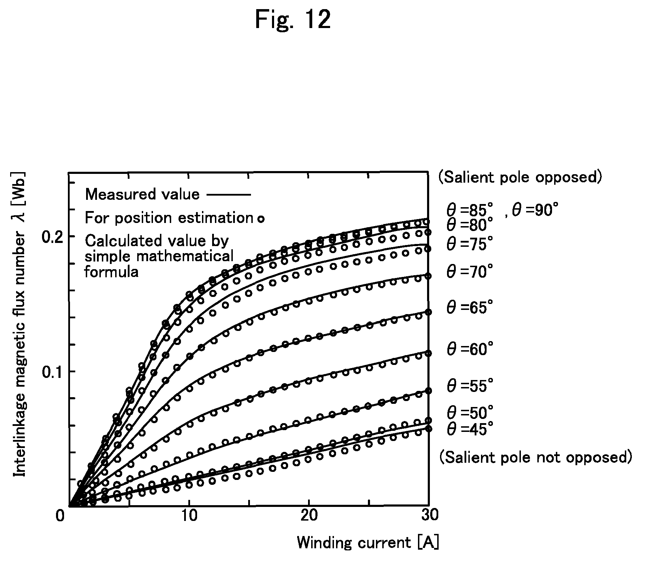

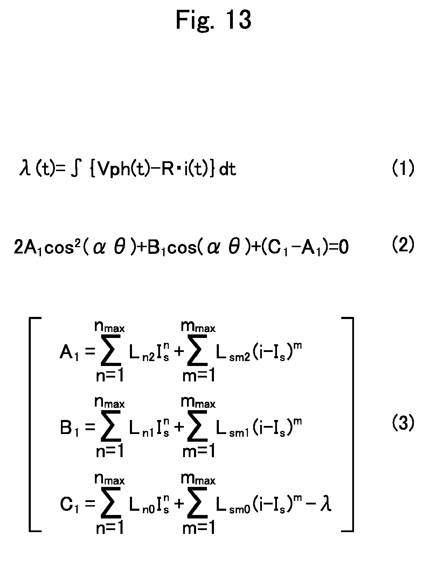

For example, the one disclosed in Non-Patent literature 1 is, as shown in Figs. 11 to 13, a position estimating method based on a simple mathematical expression of magnetization characteristic. First, an estimation phase is determined in Fig. 11. Then, an estimation phase current is selected, and the interlinkage magnetic flux number in the estimation phase is calculated. Then, a rotor position θM is calculated from the current value and the interlinkage magnetic flux number by performing a position estimating calculation using a simple mathematical formula. That is, the magnetization characteristic of the SR motor, as shown in Fig. 12, is represented by a relationship that the interlinkage magnetic flux number and the rotor position correspond to the winding current. Thus, when the winding current and the interlinkage magnetic flux number are known, it is possible to estimate the rotor position. More specifically, the position is estimated based on Fig. 13.

i) Calculate the interlinkage magnetic flux number by the equation (1) from a winding current and a winding applied voltage.

ii) Specify the position by the equation (2) from the monitor values of the interlinkage magnetic flux number and winding current calculated in i). Obtain a coefficient from the equation (3). Here, $\alpha$ represents the number of rotor poles, likewise, Vph a winding applied voltage, i a winding current, nmax a current maximum degree, Lnk Fourier coefficient, mmax a current maximum degree in a saturated region, Lmk Fourier coefficient in a saturated region.

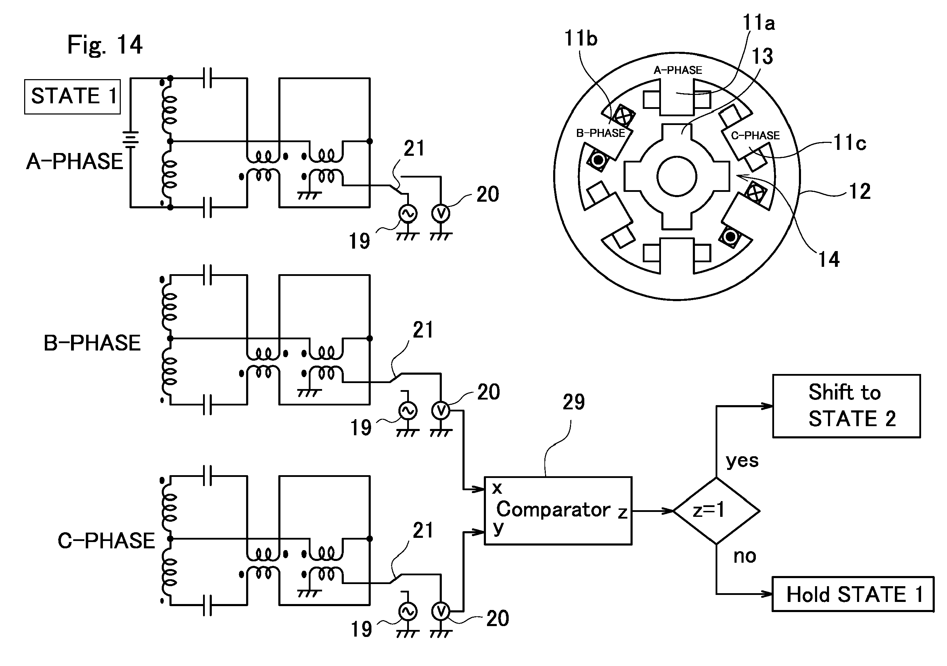

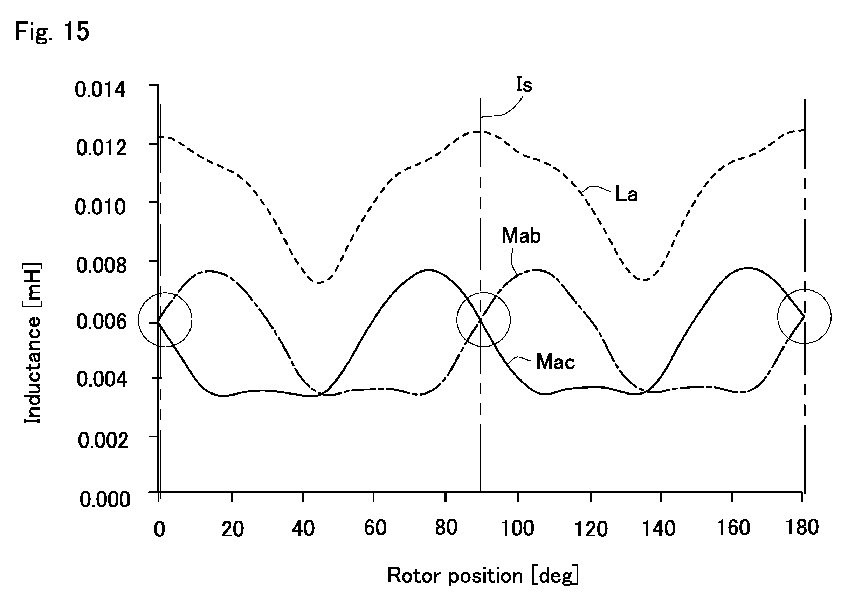

On the other hand, the rotor position detection apparatus described in Patent Literature 2, as shown in Fig. 14, assumes to be used in an SR motor with a stator 12 having three sets of phases (A-phase, B-phase, C-phase). The apparatus utilizes the fact that, in a so-called salient pole aligned state that salient poles 11a, 11b, and 11c in an excitation phase are aligned with a salient pole 13 of a rotor 14, induced voltages generated by mutual induction in the other two sets of non-excitation phases become equal (see Fig. 15, where La represents a self-inductance of A-phase, Mab represents a mutual inductance between A- and B-phases, Mac represents a mutual inductance between A- and C-phases). The apparatus drives the SR motor by switching the excitation phase at the timing when a voltage difference between the induced voltages becomes less than a predetermined value.

Specifically, a voltage signal generation means 19 injects a high-frequency signal from a neutral point of a motor winding shown in Fig. 14, a voltmeter 20 measures a voltage signal appearing in two windings of other than an injection phase, and a comparator 29 compares these signals. When the amplitudes induced in two phases coincide, the apparatus determines that the salient pole 13 of the rotor 14 is aligned with the salient poles 11a to 11c of the stator 12 of the phase injected with the signal. At this time, by using a switch 21, the injection phase and the detection phase are switched.

As described above, based on the detected rotor position information, it is possible to drive the SR motor by switching the excitation phase at an appropriate timing.

2

**CITATION LISTPATENT LITERATURE**

Non-Patent Literature 1: Takashi Kosaka, Nobuyuki Matsui, Subrata Saha, Yoji Takeda "Position Sensorless Control of SRM Based On Simple Mathematical Expression of Magnetization Characteristic", Institute of Electrical Engineers Journal D, Industry Applications Magazine, Vol. 120-D, No. 6,795-801,2000-06-01
Patent Literature 2: Japanese Unexamined Patent Application Publication No. 2015-76971

**SUMMARY OF THE INVENTION**

**PROBLEMS TO BE SOLVED BY THE INVENTION**

However, in the method of Non-Patent Literature 1, it is necessary to solve the quadratic equation shown in equation (2) for position estimation, and coefficient calculation is necessary. Thus, as a whole, due to restrictions of the computing time, there is a problem that cannot be applied to a high-speed driving state. In this literature, the current and speed control calculations have been executed in a control cycle of 127.2 $\mu$sec, and the validity of the method in an area of up to 4000 [min$^{-1}$] has been described. Here, when a speed increases, a control resolution becomes close to the limit, and a control may become impossible.

On the other hand, the configuration of Patent Literature 2 is applicable to a high-speed driving state. However, when an exciting current increases and partial saturation occurs in the rotor and stator, a distortion occurs in a mutual inductance detection waveform, or a mutual inductance itself decreases, and an induced voltage cannot be taken out. By this phenomenon, a coincident point of the mutual inductance detection waveform becomes unclear or indeterminable, and the accuracy of rotor position detection may decrease.

The present invention focuses on these problems, provided is a rotor position detection apparatus applicable to high-speed driving and capable of performing valid position detection even for magnetic saturation.

**MEANS FOR SOLVING THE PROBLEM**

The present invention has taken the following means in order to achieve the above purpose.

A rotor position detection apparatus according to the present invention includes a stator which is provided with a salient poles corresponding to a plurality of phases, each salient pole provided with an excitation winding; and a rotor which is disposed in the stator and provided with a plurality of salient poles. The apparatus is characterized by including a magnetic flux detection means which is provided in a position where a magnetic flux appearing in the stator of the motor is directly or indirectly detected, a threshold value holding unit which holds a magnetic flux generated by a phase current in a position where a magnetic flux detection means of the stator is provided, as a threshold value, when the rotor is located at a predetermined detection position; and a comparison unit which compares the threshold value with the magnetic flux detected by the magnetic flux detection means during rotation of the rotor, and wherein the apparatus detects that the rotor has reached a predetermined position, based on comparison result of the comparison unit.

The magnitude of each phase self-inductance of a salient pole motor is dependent on a positional relationship between salient poles of a stator and a rotor, and becomes maximum in a salient pole aligned state. That is, when the self-inductance can be observed, it is possible to estimate the rotor position from its magnitude. A self-inductance cannot be directly observed, but a magnetic flux when a certain phase current flows is proportional to a self-inductance. Therefore, when the magnitude of the magnetic flux when the rotor reaches a target position can be predicted and taken as a threshold value, it is possible to estimate whether the rotor has reached the target position by observing the magnetic flux during rotation of the rotor.

Therefore, according to the present invention, it is possible to detect the rotor position during driving with a relatively simple hardware configuration. Further, the arrival of the rotor at the set position is detected by hardware, the apparatus according to the invention is applicable also to high-speed rotation without complex calculations.

In order to certainly detect a rotor position even when magnetic saturation occurs, the threshold value holding unit preferably has a threshold value considering the magnetic saturation due to a phase current.

For making a configuration not restricted by a driving state and the number of poles of a salient pole motor, magnetic flux detection means comprises a pair of auxiliary windings wound around a stator yoke portion between an excitation phase and non-excitation phases located on both sides of the excitation phase, a subtraction unit for subtracting an induced voltage generated by these auxiliary windings to obtain a subtracted value, and an integration unit for integrating the subtracted value to obtain an integral value that is the interlinkage magnetic flux number. The comparator preferably compares the integrated value (the interlinkage magnetic flux number) with the threshold value.

Alternatively, as another configuration not restricted by a driving state and the number of poles of a salient pole motor, magnetic flux detection means comprises an auxiliary winding wound around a stator tooth portion of an excitation phase, and an integration unit for integrating the induced voltage generated in the auxiliary winding. The comparator compares the threshold value with the integral value.

In addition, to eliminate the necessity of the integration unit, magnetic flux detection means is preferably a Hall element that directly detects a magnetic flux flowing through a stator yoke portion or a stator tooth portion.

When the above rotor position detection apparatus is applied to a motor control apparatus so as to switch a phase to be excited by an excitation phase switching unit based on a detected rotor position, it is possible to accurately control high-speed driving of a salient pole motor with a simple configuration.

ADVANTAGE OF THE INVENTION

According to the invention described above, it is possible to provide a rotor position detection apparatus and a motor control apparatus which are applicable to high-speed driving and capable of performing valid position detection even for magnetic saturation.

BRIEF DESCRIPTION OF THE DRAWINGS

Fig. 1 is a schematic cross-sectional view of an SR motor to which an embodiment of the present invention is applied;
Fig. 2 is a diagram showing a rotation principle of the SR motor;
Fig. 3 is a diagram showing a relationship between an auxiliary winding provided in the SR motor and a magnetic flux flowing therethrough;
Fig. 4 is a diagram showing a relationship between an inductance, a phase current, and an induced voltage integral value in accordance with a rotor position of the SR motor;
Fig. 5 is a diagram showing a relationship between a threshold value and a position detection signal, in addition to a relationship between an inductance, a phase current, and an induced voltage integral value in accordance with a rotor position of the SR motor;
Fig. 6 is a diagram showing a relationship between a rotor position and a phase current of the SR motor;
Fig. 7 is a schematic diagram of a motor control apparatus to which a rotor position detection apparatus of the SR motor is applied;
Fig. 8 is a graph showing a relationship between a phase current and an induced voltage integral value due to magnetic saturation of the SR motor;
Fig. 9 is a diagram showing a modification of the present invention corresponding to Fig. 5;
Fig. 10 a diagram another modification of the present invention corresponding to Fig. 3;
Fig. 11 is a block diagram showing a conceptual configuration of a rotor position detection method according to Patent Literature (Non-Patent Literature 1);
Fig. 12 is a graph showing a relationship between a winding current and an interlinkage magnetic flux number in the rotor position detection method represented by a measured value and a calculated value;
Fig. 13 is a diagram showing a formula to be used in the calculation;
Fig. 14 is a diagram showing a conceptual configuration of a rotor position detection apparatus according to Patent Literature (Patent Literature 2); and
Fig. 15 is a graph showing a relationship between a self-inductance and a mutual inductances to be used in the detection apparatus.

DESCRIPTION OF THE PREFERRED EMBODIMENTS

Hereinafter, a motor control apparatus according to the present invention will be described with reference to the drawings.

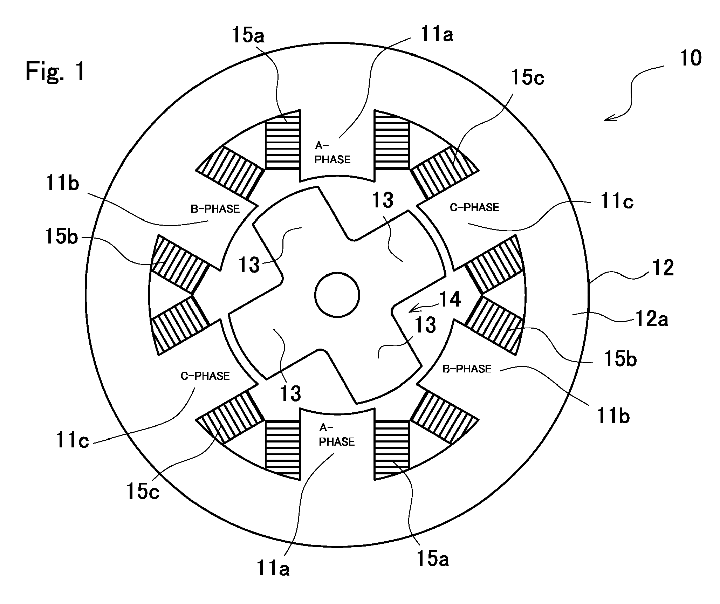

Fig. 1 is a simplified diagram showing a structure of a SR motor 10 serving as a salient pole to which a motor control apparatus Z of the present invention is applied. The SR motor 10 shown in Fig. 1 comprises a stator 12 having six salient poles (stator tooth portion) 11 (11a, 11b, 11c) projecting from an annular stator yoke portion 12a toward inside, and a rotor 14 having four salient poles 13 rotatably disposed inside the stator 12 and projecting toward outside. The salient pole 11 of the stator 12 is disposed at equal interval of 60 degrees, and the salient pole 13 of the rotor 14 is disposed at equal interval of 90 degrees, thereby forming a 4-rotor pole 6-stator pole configuration (so-called a 4-6 motor).

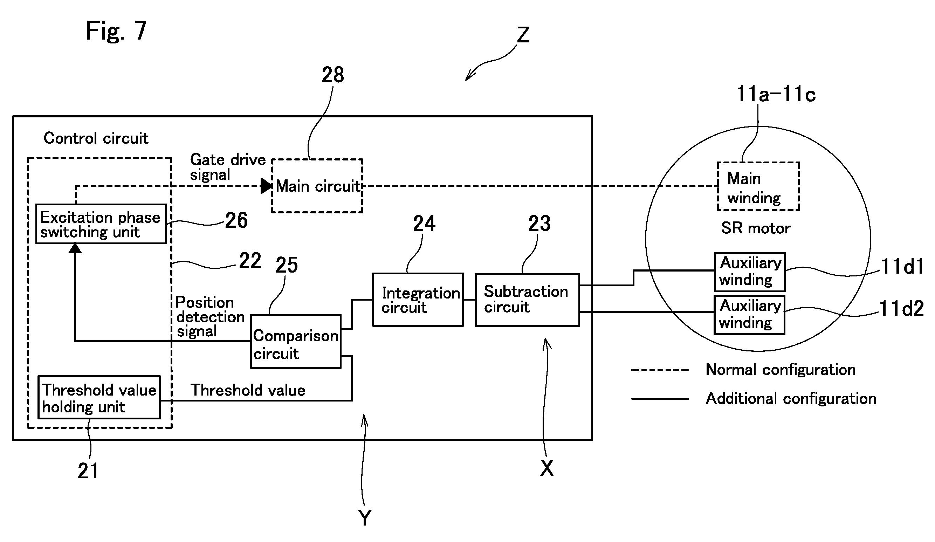

Hereinafter, description will be based on the 4-6 motor, but the number of poles is not limited to this. Main windings for excitation 15a and 15a, 15b and 15b, and 15c and 15c are wound respectively around opposed salient poles 11a and 11a, 11b and 11b, and 11c and 11c of the stator 12. This forms a 3-phase stator 12, which includes an A-phase comprising a pair of salient poles 11a and 11a wound with the main windings for excitation 15a and 15a, a B-phase comprising a pair of salient poles 11b and 11b wound with the main windings 15b and 15b for excitation, and a C-phase comprising a pair of salient poles 11c and 11c wound with the main windings for excitation 15c and 15c. Each winding 15a to 15c is connected to a main circuit 28 described later based on Fig. 7, so that a control circuit 22 supplies the main circuit 28 with a gate drive signal for selectively applying an excitation voltage of A- to C-phase.

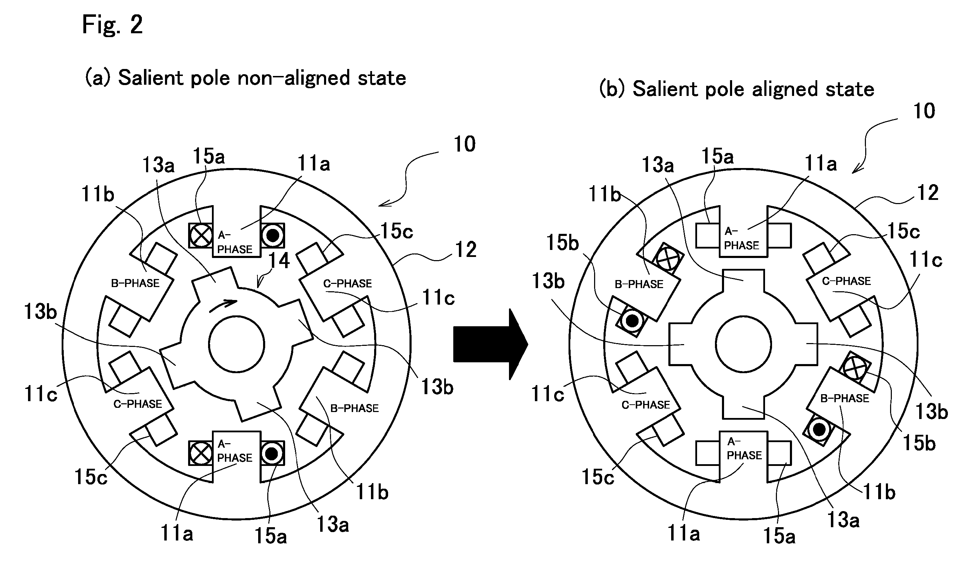

Here, a rotation principle of the SR motor 10 will be explained with reference to Fig. 2. Fig. 2 (a) shows a location of the rotor 14 in a salient pole non-aligned state, where the salient poles 11a to 11c of the stator 12 are not opposed to the salient poles 13a to 13b of the rotor 14, and a magnetic flux is difficult to flow. At this point, the winding 15a of the stator 12, that is, the A-phase is excited. At this time, a torque is generated in the rotor 14, and the rotor 14 is rotated, in a salient pole aligned state where a magnetic flux is most likely to flow, that is, the salient pole 11a is aligned with the salient pole 13a of the rotor 14. Then, when the excitation phase switching unit 26 shown in Fig. 7 switches an excitation phase to the B-phase at the timing when the rotor 14 is rotated to the salient pole aligned state shown in Fig. 2 (b), a torque is generated to align the salient pole 11b of the stator 12 with the salient pole 13b of the rotor 14. Then, when the excitation phase switching unit 26 switches an excitation phase to the C-phase at the timing when the salient pole 11b of the stator 12 is aligned with the salient pole 13b of the rotor 14, a torque is generated to align the salient pole 11c of the stator 12 with the salient pole 13a of the rotor 14. In this way, by switching an excitation phase based on the position of the rotor 14, a torque is generated by a continuous magnetic attraction force, and the SR motor 10 is rotated.

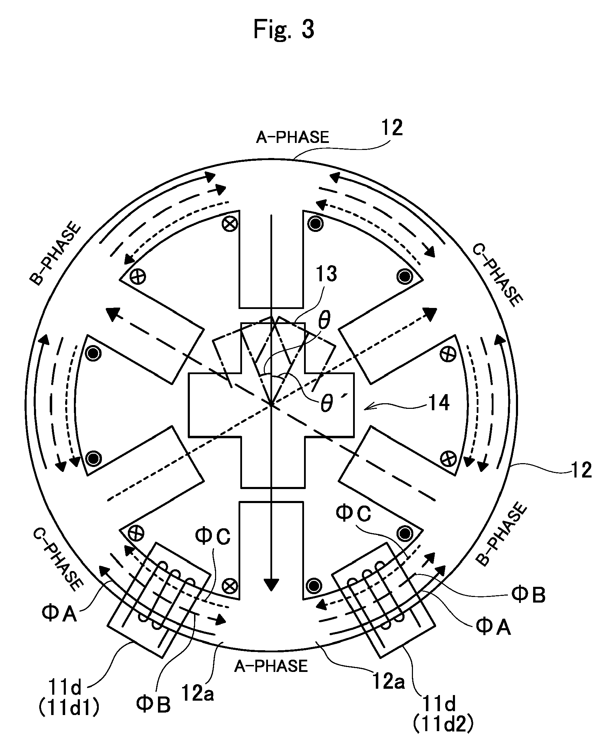

In such a configuration, this embodiment is provided with auxiliary windings 11d (11d1, 11d2) for detecting a rotor position in the stator yoke portion 12a, separately from the main windings for excitation 11a, 11b, 11c, as shown in Fig. 3, in order to detect a rotor position from a magnetic flux generated in an excitation phase. In the auxiliary windings 11d1 and 11d2, the number of turns N is set equal.

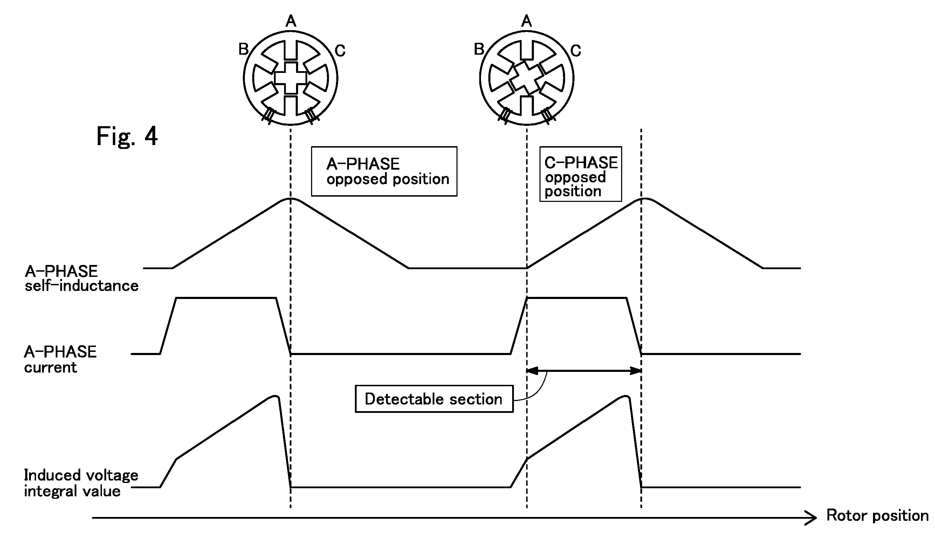

Regarding a magnitude of a self-inductance when a magnetic flux flows in each phase of the SR motor 10, a self-inductance of the A-phase becomes maximum, as shown in Fig. 4, in the aligned state that the stator 12 of A-phase as shown in Fig. 3 is opposed to the salient pole 13 of the rotor 14. As deviating from there to a non-aligned direction, the self-inductance decreases depending on a positional relationship between the salient poles of the stator 12 and the rotor 14.

That is, when the self-inductance can be observed, the position of the rotor 14 can be estimated from its magnitude. However, it is difficult to directly observe a self-inductance. Thus, in this embodiment, a magnetic flux detection means X (see Fig. 7) is configured using an induced voltage generated in the auxiliary winding 11d provided on the stator yoke portion 12a.

A relationship between the induced voltage (V) generated in the auxiliary winding 11d, the interlinkage magnetic flux number ($\Phi$), the current (I), and the inductance (L) will be described.

The interlinkage magnetic flux number is expressed by the equation (1).

$$LI = \Phi \qquad \dots (1)$$

Further, an induced electromotive force (induced voltage) generated in the auxiliary winding is expressed by the equation (2) by the Faraday's law.

$$V = -d\Phi/dt \qquad \dots (2)$$

The induced voltage is integrated by the equation (3).

$$\int V dt = -\Phi + C = -LI + C \text{ (C: Integration constant)} \qquad \dots (3)$$

At this time, when the current is constant, the integral value of the induced voltage (hereinafter, simply referred to as an "integral value") is a value dependent on the inductance L. Fig. 4 shows a relationship between a rotor position, an A-phase current during power driving of the SR motor, an induced voltage integral value, and a self-inductance of A-phase.

This method utilizes the magnetic flux flowing in the stator yoke portion 12a and the relationship that the self-inductance L depends on the position of the rotor 13, a section satisfying the following two conditions is a rotor position detectable section (see Fig. 4).

i) A current flows through the phase to be used for rotor position detection.

ii) A self-inductance of the phase to be used for rotor position detection changes.

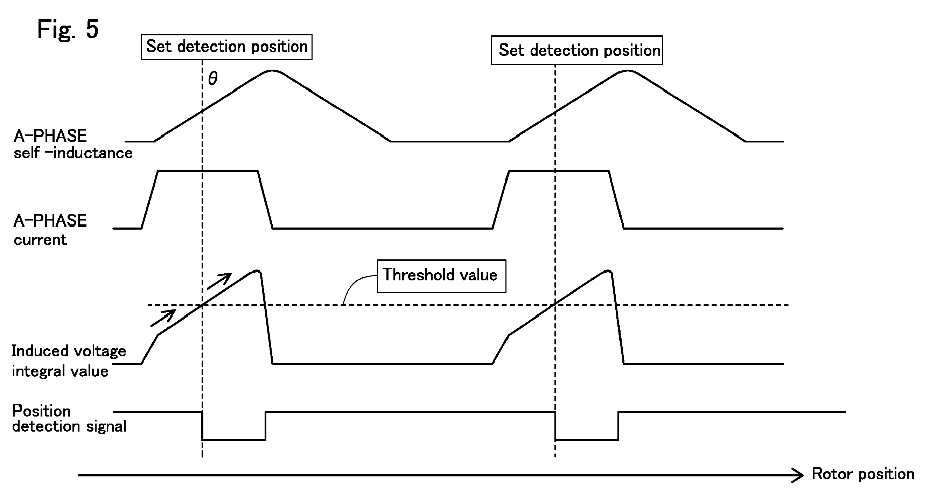

A detection position is optionally set in this detectable section. For example, in Fig. 3, four salient poles 13 are sequentially opposed to the salient pole 11a of the A-phase stator while the rotor 14 is rotated one turn, and a self-inductance becomes maximum at intervals of 90°. When the detection position is set to the angle θ in reference to the self-inductance (see Fig. 3), a magnitude of the self-inductance at the set detection position θ of the rotor 14 is determined, and a magnitude of the integral value of the equation (3) depends on the phase current. Thus, it is possible to know in advance the relationship between the magnitude of the integral value and the phase current at the detection position θ. When the magnitude of the integral value at the set detection position θ corresponding to the phase current is assumed to be a threshold value as shown in Fig 5, it is possible to detect that the rotor has reached the detection position θ according to the fact seen from the equation (3) that as the rotor is moved to the aligned position, the integral value increasing with the self-inductance L becomes equal to the threshold value (see arrows in Fig. 5).

Therefore, as shown in FIG 7, a comparison unit (comparison circuit) 25 and a threshold value holding unit 21 are provided, a rotor position detection device Y is configured together with a magnetic flux detection means X, and a position detection signal from the comparison unit (comparison circuit) 25 is inputted to the control circuit 22. The position detection signal in Fig. 5 is picked up by the comparator when the induced voltage is greater than the threshold value. Any configuration is permitted as long as the arrival at the threshold value can be detected.

When the rotor position can be detected in this way, the speed of the rotor 14 is known, and the time required for the A-phase to shift from the detection position θ to the salient pole aligned state. Therefore, the motor control apparatus Z can utilize this for timing control and the like in the excitation phase switching unit 26.

Here, it is necessary to consider a case where starting integration along with switching an excitation phase may be affected by a previous excitation phase, and a case where an inductance value may decreases due to magnetic saturation depending on a phase current magnitude.

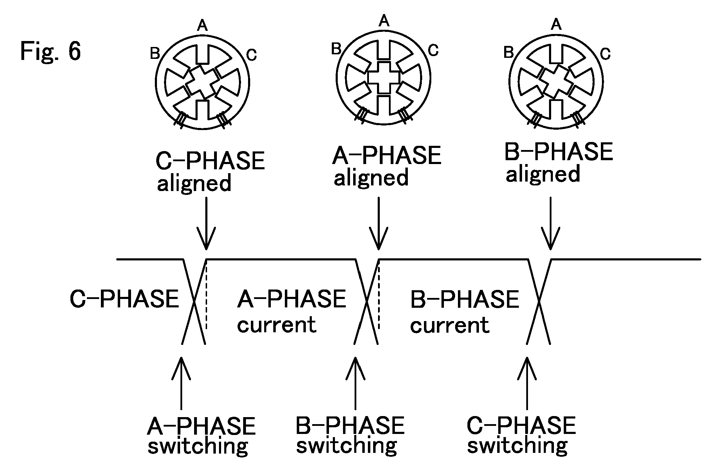

First, this embodiment represents a method based on using the magnetic flux flowing in the stator yoke portion 12a. Thus, when the induced voltage generated in the auxiliary winding 11d is directly integrated at the timing when the excitation sections of the phase used for rotor position detection and the other phases are overlapped, the integration is affected by the other phases. That is, as shown in Fig. 5, the phase current neither immediately rises to a square portion nor not fall therefrom. Thus, at the time of switching the excitation phase, as shown in Fig. 6, the phase current in the previous excitation phase (for example, C-phase) overlaps with the phase current in the next excitation phase (for example, A-phase). Therefore, when the integration of the induced voltage is started simultaneously with the switching of the excitation phase, the integration is affected by the magnetic flux caused by excitation of the other phases.

Therefore, the magnetic flux detection means X of this embodiment, as shown in Figs. 3 and 7, uses two auxiliary windings 11d1 and 11d2 provided between the phase used for rotor position detection (here, the A-phase) and adjacent phases (B-phase, C-phase), and comprises a subtraction unit (subtraction circuit) 23 that subtracts the induced voltages generated in these auxiliary winding 11d1 and 11d2, and an integration unit (integration circuit) 24 that integrates the output of the subtraction circuit 23. In other words, the magnetic flux detection means X comprises the auxiliary windings 11d1 and 11d2, the subtraction circuit 23, and the integration circuit 24. The rotor position detection apparatus Y comprises the magnetic flux detection means X, the threshold value holding unit 21, and the comparison unit 21 (comparison circuit 25). This example assumes the case of using the A-phase for rotor position detection, and selects two points between A-phase - B-phase and A-phase - C-phase. Rotor position detection may be done in the other phases.

Regarding the detection auxiliary windings 11d1 and 11d2 in Fig. 3, with respect to the winding direction of these two auxiliary windings 11d1 and 11d2, the flow of magnetic flux øA caused by excitation of the A-phase is a reverse direction, but the flows of magnetic flux øB and øC caused by excitation of the B-C-phase are the same direction. Therefore, when the induced voltage based on these is taken out and subtracted by the subtraction circuit 23, the induced voltage caused by excitation of the A-phase is a multiple of the magnitude of the induced voltage generated in one auxiliary winding 11d1 (11d2), but the induced voltages caused by excitation of B- and C-phases are canceled and become zero.

Therefore, it is possible to extract only the magnetic flux generated in the A- phase, and the rotor position detection is possible without being affected by excitation of the other phases. Thus, indirect measurement of inductance is possible without being restricted by the driving state and the number of poles of the SR motor 10. In this case, since the induced voltage is doubled by the subtraction, the threshold value is set to double in advance.

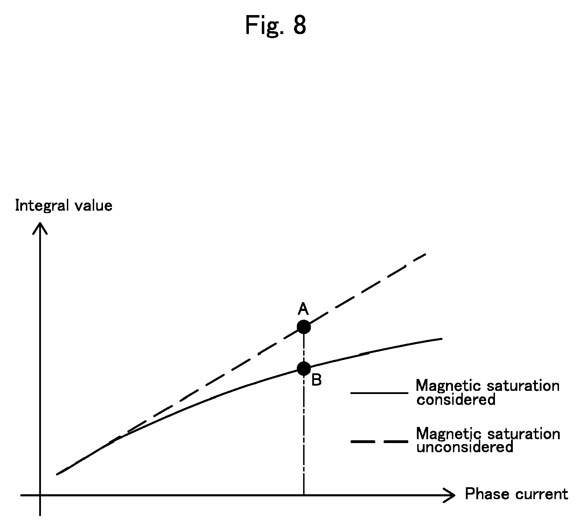

Next, magnetic saturation is a problem. When a phase current increases and even partial saturation occurs in the rotor 14 and the stator12, a self-inductance does not become undetectable unlike a mutual inductance. However, a magnetic flux becomes difficult to flow, and in spite of reaching a predetermined position, as shown in Fig. 8, an induced voltage integral value is observed only at the point B lower than the original point A, a rotor position may be misidentified on a delayed side.

Therefore, by an analysis considering such magnetic saturations, a relationship between an integral value and a phase current at a detection position is understood in advance, as shown in FIG. 8. The integral value reflecting this (i.e., the integral value of the point B not the point A at the predetermined position) is held as a threshold value in the threshold value holding unit 21 shown in Fig. 7. Thereby, even when the phase current is great and the SR motor 10 is magnetically saturated, it is possible to realize the rotor position detection apparatus Y capable of accurately detecting a rotor position.

As described above, the rotor position detection apparatus Y according to the present embodiment is applied to the SR motor 10 comprising the stator 12 which is provided with the salient poles 11 (11a, 11b, 11c) corresponding to a plurality of phases, each salient pole 11 (11a, 11b, 11c) provided with the excitation winding 15a, 15b, 15c, respectively; and the rotor 14 which is disposed in the stator 12 and provided with a plurality of salient poles 13. The magnetic flux detection means X is provided in a position where a magnetic flux appearing in the stator 12 of the SR motor 10 is indirectly detected. The rotor position detection apparatus Y comprises the threshold value holding unit 21 which holds a magnetic flux generated by a phase current in the position where the magnetic flux detection means X (auxiliary winding 11d) of the stator 12 is provided, as a threshold value, when the rotor 14 is located at a predetermined detection position; and the comparison unit (comparison circuit) 25 which compares the threshold value with the magnetic flux detected by the magnetic flux detection means X during rotation of the rotor 14. The rotor position detection apparatus Y detects that the rotor 14 has reached a predetermined position based on the comparison result of the comparison unit 25.

Thus, it is possible to detect a rotor position while driving by a relatively simple hardware configuration. Further, it is possible to detect that the rotor has reached a set detection position. Thus, the apparatus is applicable to high-speed rotation without complex calculations.

In particular, since the threshold value holding unit 21 holds a threshold value considering the magnetic saturation due to a phase current, it is possible to effectively detect that the rotor has reached a predetermined position by decreasing a threshold value as a reference.

Further, the magnetic flux detection means X comprises a pair of auxiliary windings 11d1 and 11d2 which are wound around the stator yoke portion 12a between the excitation phase and the non-excitation phases located on both sides of the excitation phase; the subtraction unit (subtraction circuit) 23 which subtracts the induced voltage generated in the auxiliary windings 11d1 and 11d2; and the integration unit (integration circuit) 24 which integrates the subtracted value. The comparison unit (comparison circuit) 25 compares a threshold value with the integral value that is the interlinkage magnetic flux number. Since the magnetic flux caused by excitation of the other phases is canceled by subtraction due to the difference in the direction of the magnetic flux generated in the stator yoke portion 12a, the detection is not restricted by a driving state and the number of poles of the SR motor 10. Therefore, as shown in Fig. 6, even when excitation of the next phase is started in a state that a magnetic flux of the previous phase remains, it is possible to detect a magnetic flux generated in an excitation phase without being affected by the remaining magnetic flux of the previous excitation phase.

Then, by applying the rotor position detection apparatus Y as described above, and switching an excitation phase to be excited by the excitation phase switching unit 26 based on a detected rotor position, it is possible to realize the motor control apparatus Z capable of accurately controlling high-speed driving of the SR motor 10 with a simple configuration.

Although the exemplary embodiments of the present invention have been described above, the present invention is not limited to the above embodiments. For example, the following forms are considerable.

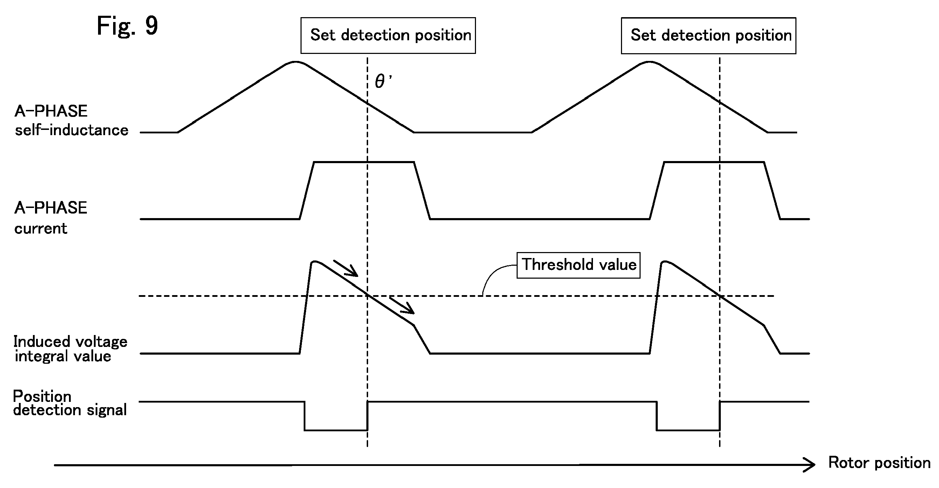

In the above embodiment, the present invention is applied when power driving an SR motor. As shown in Fig. 9, the present invention may be applied when regenerative driving an SR motor. In other words, it is possible to detect that the rotor has reached the detection position θ' (see Fig. 3) according to the fact that as the rotor is moved away from the aligned position, the integral value increasing with the self-inductance L becomes equal to the threshold value (see arrows in Fig.9).

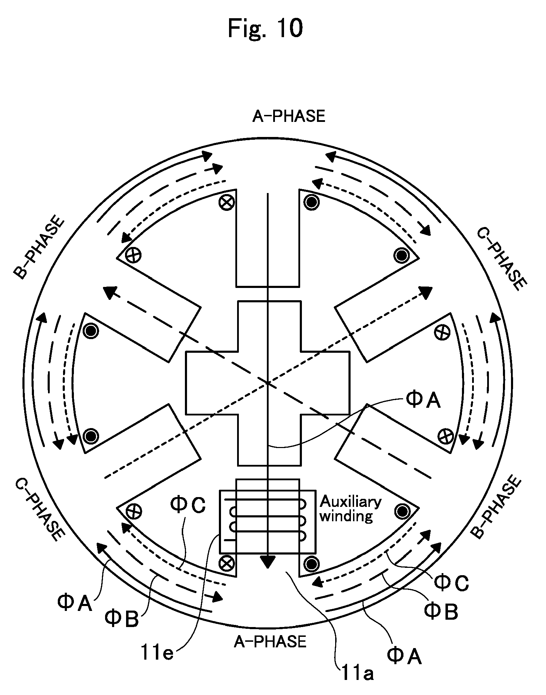

Further, as shown in Fig. 10, the magnetic flux detection means X may comprise the auxiliary winding 11e wound around the salient pole (stator tooth portion) 11a of excitation phase, and the integration circuit 24 for integrating the induced voltage generated in the auxiliary winding 11e (see Fig. 7). The comparison unit 25 of the rotor position detection apparatus Y may compare the threshold value with the interlinkage magnetic flux number that is an integral value.

In such a configuration, it is possible to detect the magnetic flux øA at the position where the magnetic fluxes øB and øC by the other phase excitation does not flow, and the detection is not restricted by the driving state and the number of poles of the SR motor 10. Therefore, as shown in Fig. 6, even when excitation of the next phase is started in a state that a magnetic flux of the previous phase remains, it is possible to detect the magnetic flux generated in the excitation phase without being affected by the remaining magnetic flux of the previous excitation phase. Further, since subtraction is unnecessary, the subtraction circuit 23 becomes unnecessary, and one auxiliary winding 11e is sufficient.

Of course, under the condition that an excitation timing of all phases is not overlapped when driving the SR motor, and single phase is always excited, detection is not affected by the other phases. Therefore, one auxiliary winding 11d is sufficient in the yoke portion 12a shown in Fig. 3, and the subtraction circuit 23 is unnecessary.

Further, in addition to utilizing an induced voltage of an auxiliary winding, there is a method of detecting a magnetic flux using a Hall element. A Hall element (not shown) is buried in the part wound with the auxiliary winding in Fig. 6 or Fig. 10 for detecting a magnetic flux. The position detection method is basically the same as the case of using an auxiliary winding. In this modification, since a magnetic flux is directly detected, integration is unnecessary and the integration circuit 24 can be eliminated.

Other configurations may also be variously modified without departing from the scope of the present invention. A rotor position detection apparatus (Y) is applied to a SR motor (10) including a stator (12) having salient poles (11a-11c) corresponding to a plurality of phases, each salient pole (11a-11c) having excitation windings (15a-15c), and a rotor (14) disposed in the stator (12) and provided with a plurality of salient poles (13). A magnetic flux detection means (X) is provided with a detection part in a position where a magnetic flux generated by a phase current in the stator (12) is detected. The apparatus (Y) includes a threshold value holding unit (21) holding the magnetic flux detected by the detection part as a threshold value, when the rotor (14) is located at a predetermined detection position; and a comparison unit (25) comparing a threshold value with the magnetic flux, wherein the apparatus (Y) detects that the rotor (14) has reached a predetermined position, based on the comparison result of the unit (25).

## DESCRIPTION OF REFERENCE NUMERALS

| | |
|---|---|
| 11a | Salient pole, Stator tooth portion (stator side) |
| 11d, 11d1, 11d2 | Auxiliary winding |
| 11e | Auxiliary winding |
| 12 | Stator |
| 12a | Stator yoke portion |
| 13 | Salient pole (rotor side) |
| 14 | Rotor |
| 21 | Threshold value holding unit |
| 23 | Subtraction unit (subtraction circuit) |
| 24 | Integration unit (integration circuit) |
| 25 | Comparison unit (comparison circuit) |
| 26 | Excitation phase switching unit |
| X | Magnetic flux detection means |
| Y | Rotor position detection apparatus |
| Z | Motor control apparatus |

## Claims

1. A rotor position detection apparatus (Y) of a motor (10) comprising a stator (12) which is provided with salient poles (11a, 11b, 11c) corresponding to a plurality of phases, each salient pole (11a, 11b, 11c) provided with an excitation winding (15a, 15b, 15c); and a rotor (14) which is disposed in the stator (12) and provided with a plurality of salient poles (13),

   **characterized by** comprising:

   a magnetic flux detection means (X) having a detection part which is provided in a position where a magnetic flux generated by a phase current in the stator (12) is directly or indirectly detected, a threshold value holding unit (21) which holds the magnetic flux detected by the detection part of the magnetic flux detection means (X) as a threshold value, when the rotor (14) is located at a predetermined detection position; and a comparison unit (25) which compares the threshold value with the magnetic flux detected by the detection part of the magnetic flux detection means (X) during rotation of the rotor (14), wherein the apparatus (Y) detects that the rotor (14) has reached a predetermined position, based on comparison result of the comparison unit (25).

2. The rotor position detection apparatus (Y) according to claim 1, wherein

   the magnetic flux detection means (X) comprises:

a pair of auxiliary windings (11d1, 11d2), as the detection part, which is wound around a stator yoke portion (12a) between an excitation phase and non-excitation phases located on both sides of the excitation phase; a subtraction unit (23) which subtracts an induced voltage generated in these auxiliary windings to obtain a subtracted value; and

an integration unit (24) which integrates the subtracted value to obtain an integral value that is an interlinkage magnetic flux number, and

the comparison unit (25) compares the threshold value with the integral value.

3. The rotor position detection apparatus (Y) according to claim 1, wherein

the magnetic flux detection means (X) comprises an auxiliary winding (11e), as the detection part, which is wound around a stator tooth portion (11a) of excitation phase; and an integration unit (24) which integrates an induced voltage generated in the auxiliary winding to obtain an integral value that is an interlinkage magnetic flux number , and

the comparison unit (25) compares the threshold value with the integral value.

4. The rotor position detection apparatus (Y) according to claim 1, wherein

the detection part of the magnetic flux detection means (X) is a Hall element which directly detects a magnetic flux flowing in a stator yoke portion (12a) or a stator tooth portion (11a).

5. A motor control apparatus (Z), which applies the rotor position detection apparatus (Y) according to claims 1 to 4, and switches a phase to be excited by an excitation phase switching unit (26), based on a detected rotor position.

Fig. 1

EP 3 168 977 A1

Fig. 2

(a) Salient pole non-aligned state

(b) Salient pole aligned state

## Fig. 3

Fig. 4

A-PHASE self-inductance

A-PHASE current

Induced voltage integral value

A-PHASE opposed position

C-PHASE opposed position

Detectable section

Rotor position

## Fig. 5

A-PHASE self –inductance

A-PHASE current

Set detection position

Set detection position

θ

Induced voltage integral value

Threshold value

Position detection signal

Rotor position

EP 3 168 977 A1

Fig. 6

C-PHASE
aligned

A-PHASE
aligned

B-PHASE
aligned

C-PHASE

A-PHASE
current

B-PHASE
current

A-PHASE
switching

B-PHASE
switching

C-PHASE
switching

## Fig. 7

EP 3 168 977 A1

# Fig. 8

Fig. 9

EP 3 168 977 A1

## Fig. 10

## Fig. 11

(step1)

U or V or W

Determine estimation phase

(step3)

Position estimating calculation by simple formula

$\lambda = \int (Vph - Ri)dt$ ... i

i

Select estimation phase current

Iuvw

$\theta$ M

Calculate the interlinkage magnetic flux number in estimation phase

$\lambda = \int (Vph - Ri)dt$

Vde

PWM pattern

$\lambda$

(step2)

(step5)

$\theta$ M or $\theta$ p

$\theta$ e

(step4)

Calculate backup position

$\theta$ p

EP 3 168 977 A1

Fig. 12

# Fig. 13

$$\lambda(t) = \int [Vph(t) - R \cdot i(t)] \, dt \qquad (1)$$

$$2A_1\cos^2(\alpha\,\theta) + B_1\cos(\alpha\,\theta) + (C_1 - A_1) = 0 \qquad (2)$$

$$\begin{bmatrix} A_1 = \displaystyle\sum_{n=1}^{n_{max}} L_{n2}I_s^n + \sum_{m=1}^{m_{max}} L_{sm2}(i-I_s)^m \\[2em] B_1 = \displaystyle\sum_{n=1}^{n_{max}} L_{n1}I_s^n + \sum_{m=1}^{m_{max}} L_{sm1}(i-I_s)^m \\[2em] C_1 = \displaystyle\sum_{n=1}^{n_{max}} L_{n0}I_s^n + \sum_{m=1}^{m_{max}} L_{sm0}(i-I_s)^m - \lambda \end{bmatrix} \qquad (3)$$

## Fig. 14

STATE 1

A-PHASE

21
19 20

B-PHASE

21
19 20

C-PHASE

21
19 20

29

x
Comparator z
y

z=1

yes → Shift to STATE 2

no → Hold STATE 1

11b 11a 13

A-PHASE

B-PHASE C-PHASE 11c

12

14

EP 3 168 977 A1

Fig. 15

Inductance [mH]

0.014 0.012 0.010 0.008 0.006 0.004 0.002 0.000

Is

La

Mab

Mac

Rotor position [deg]

0  20  40  60  80  100  120  140  160  180

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUN CAI ET AL: "A Switching Flux-linkage Reference-based Sensorless Method for Switched Reluctance Motor Drives", ELECTRIC POWER COMPONENTS AND SYSTEMS, vol. 42, no. 2, 25 January 2014 (2014-01-25), pages 227-237, XP055352371, US ISSN: 1532-5008, DOI: 10.1080/15325008.2013.853219 * the whole document * | 1-5 | INV. H02P6/16 H02P25/089 |
| A | US 2002/149331 A1 (MARCINKIEWICZ JOSEPH GERALD [US]) 17 October 2002 (2002-10-17) * paragraph [0100] * | 1-5 | |

TECHNICAL FIELDS SEARCHED (IPC)

H02P

The present search report has been drawn up for all claims

| Place of search | Date of completion of the search | Examiner |
|---|---|---|
| Munich | 7 March 2017 | Schneider, Gernot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 7930

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2017

| Patent document cited in search report | Publication date | Patent family member(s) | Publication date |
|---|---|---|---|
| US 2002149331 A1 | 17-10-2002 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015076971 A

**Non-patent literature cited in the description**

- **TAKASHI KOSAKA ; NOBUYUKI MATSUI ; SUBRATA SAHA ; YOJI TAKEDA.** Position Sensorless Control of SRM Based On Simple Mathematical Expression of Magnetization Characteristic. *Institute of Electrical Engineers Journal D, Industry Applications Magazine,* 01 June 2000, vol. 120-D (6), 795-801